# EUROPEAN PATENT APPLICATION

(11) **EP 0 814 428 A2**
(43) Date of publication of application: **29.12.1997**
(21) Application number: 97304205.4
(22) Date of filing: 16.06.1997
(51) Int. Cl.: G06T 1/60

(54) **A method and apparatus for transferring pixel data stored in a memory circuit**

(30) Priority: 20.06.1996 US 667207
(71) Applicant: CIRRUS LOGIC, INC., Fremont, CA 94538-6423 (US)
(72) Inventor: Mills, Karl Scott, Lynnwood, WA 98037 (US); Bonnelycke, Mark Emil, Seattle, WA 98105 (US); Hasz, Vernon Dennis, Bellevue, WA 98008 (US); Holmes, Jeffrey Michael, Seattle, WA 98136 (US); Owen, Richard Charles Andrew, Seattle, WA 98118 (US); Linstad, Lauren Emory, Renton, WA 98058 (US); May, Bradley Andrew, San Jose, CA 95125 (US)
(74) Representative: Cross, Rupert Edward Blount

(57) **Abstract**

A graphics controller circuit for transferring pixel data of a source area to a destination area in a memory implementing a tiled scheme for storing pixel data. The destination area may be divided into a plurality of destination sub-areas defined by X and Y tile boundaries, and source pixel data corresponding to each of the destination sub-areas may be transferred in a series of block transfers. As pixel data stored in each block transfer may be located within a tile, the amount of time required to store the pixel data may be minimized.

## Description

### FIELD OF THE INVENTION

The present. invention relates generally to computer graphics systems and more specifically to a method and apparatus for transferring pixel data stored in an area of a memory circuit to another area of the memory circuit.

### BACKGROUND OF THE INVENTION

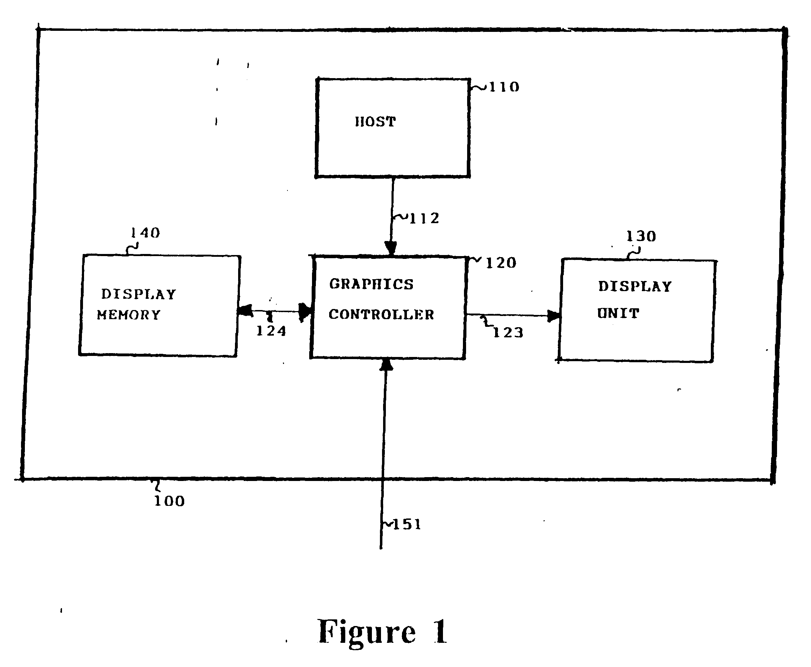

Graphics controller circuits generating display signals to a display unit from display data stored in a memory unit are known in the prior art. Figure 1 is a block diagram of computer system 100 comprising one such graphics controller circuit 120 which may generate display signals to display unit 130 from display data stored in display memory 140. Such display data may comprise, for example, pixel data (encoded in formats such as RGB 888) corresponding to each pixel on display unit 130.

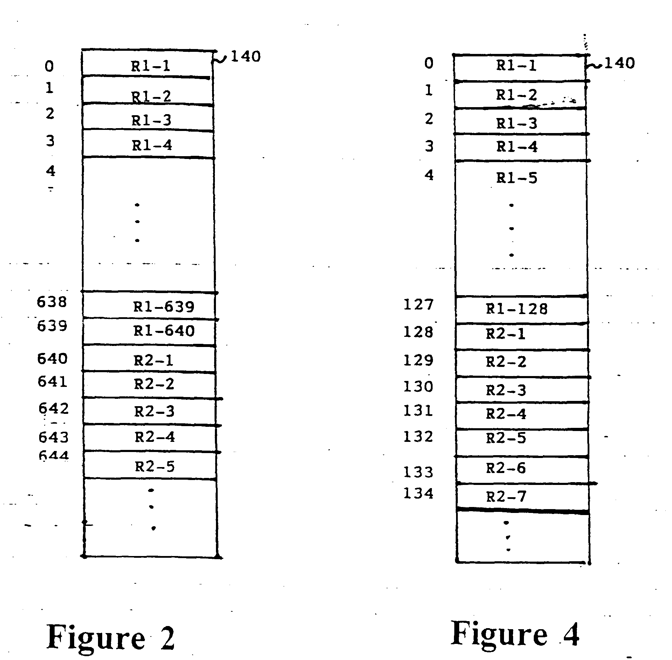

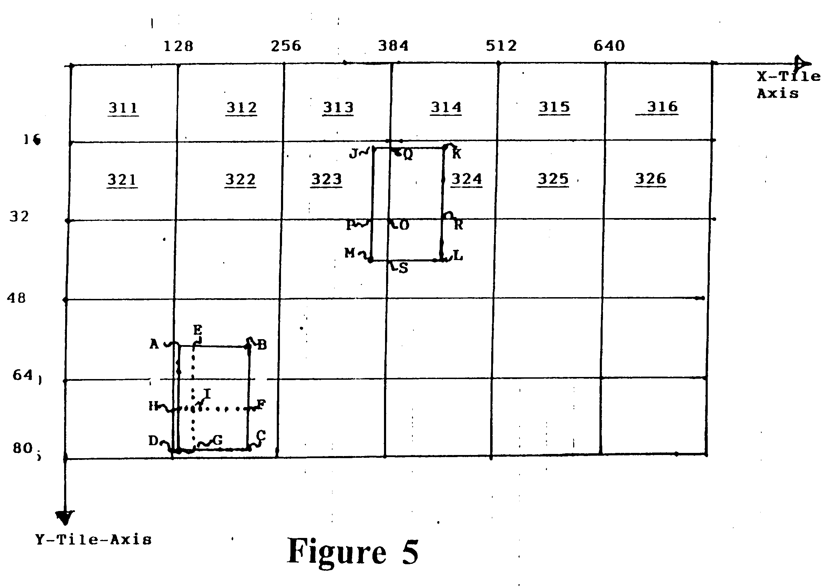

Prior art display memory 140 may store display data in a scan line order as shown in Figure 2. In a scan line order of storing pixel data, pixel data corresponding to one scan line of an image may be stored in contiguous memory locations prior to storing pixel data of another scan line. Hence pixel data of scan line 1 (R1-1, R1-2, R1-3 ... R1-640, etc.) of display unit 130 may be stored in contiguous memory locations before scan line 2 pixel data in Figure 4 (R2-1, R2-2, R2-3 ... R2-640, etc.).

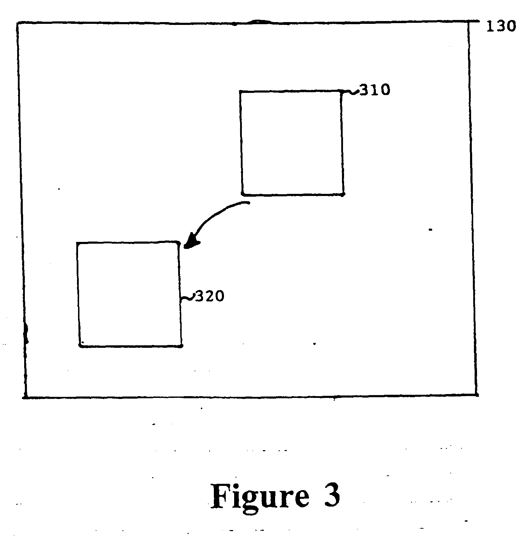

Computer system 100 may be required to 'move' a portion of a video image from one area (hereinafter referred to as source area) on display unit 130 to another area (hereinafter referred to as destination area) of display unit 130. For example, a user of computer system 100 may request that image corresponding to a rectangular area 310 area be moved to area 320 as illustrated in Figure 3.

In response to such an image move request, graphics controller 120 may retrieve pixel data for source area 310 (for example, in memory locations of display memory 140), and save retrieved pixel data in memory locations corresponding to destination area 320. Graphics controller circuit 120 may then generate display signals from display memory 140 with such transferred pixel data.

One disadvantage with storing display data in a scan line order in display memory 140 is that retrieving and storing of pixel data for a move operation may require accesses to different rows of display memory 140. As successive memory accesses to different memory rows may require more time than successive memory accesses within a same memory row, throughput performance of graphics controller 120 may be impeded, thereby affecting the throughput performance of computer system 100.

In order to decrease the number of memory accesses across different memory rows, graphics controller circuit 120 may store display data in a tiled scheme as shown in Figure 4. In a tiled scheme, a display screen on display unit 130 may be divided into several logical tiles (311-315, 321-325, 331-335 etc.) as shown in Figure 5, and pixel data of a tile may be stored in contiguous memory locations in display memory 140 prior to storing pixel data of another tile. Each tile may have predetermined size such as 128 X 16 pixels.

Hence, in Figure 4, display data (encoded in one memory location per pixel format) of scan line 1 (pixels R1-1 through R1-128) of tile 311 may be stored in memory locations 0-127 of display memory 140, and display data of scan line 2 of tile 311 may be shown stored in locations 128-255. As display data corresponding to adjacent pixels is stored in contiguous memory locations, number of memory accesses (storing or retrieving) across different memory rows may be decreased in comparison to the scan line dominant storing scheme of Figure 2, thereby increasing performance of computer system 100.

However, if source area ABCD or destination area JKLM of a move operation crosses tile boundaries as shown in Figure 5, accesses across different memory rows in display memory 130 may be required to perform such a move operation. In order to minimize performance impact due to successive accesses across different memory rows, it may be desirable to decrease the number of such successive accesses across different memory rows.

### SUMMARY OF THE INVENTION

The present invention may be implemented in a graphics controller circuit operating in conjunction with a memory. The memory may store pixel data of a video image in a set of memory locations according to a tiled scheme. The tiled scheme may comprise a plurality of tiles on a display screen for displaying the video image. The plurality of tiles may be defined by a set of X-tile boundaries and a set of Y-tile boundaries.

The method and apparatus of the present invention may transfer a set of pixel data corresponding to a source area to memory locations corresponding to a destination area. Destination area and source area may be defined by a set of boundary lines. The destination area may cross at least one X-tile boundary and at least one Y-tile boundary.

The method and apparatus of the present invention may divide the destination area into a set of destination rectangular sub-areas defined by the at least one X-tile boundary, the at least one Y-tile boundary and boundary lines of the destination area. The pixel data of a first source rectangular sub-area comprised in the source area may be retrieved, wherein the first source rectangular sub-area may correspond to a first destination rectangular sub-area comprised in a set of destination rectangular sub-areas. Retrieved pixel data may be stored in memory locations corresponding to a first destination rectangular sub-area. The above steps may be repeated for each set of destination rectangular sub-areas.

The step of retrieving pixel data of a first source rectangular sub-area may further comprise the steps of determining a number of pixel data which may be retrieved in a single block transfer, and retrieving at most the number of pixel data in each block transfer. Such a step of retrieving at most the number of pixel data may be repeated to retrieve all pixel data of the first source rectangular sub-area. In a preferred embodiment, pixel data corresponding to only complete scan lines may be retrieved in each block transfer. The step of storing pixel data in a destination area may be performed in a single block transfer.

The method of the present invention may further comprise the steps of determining whether the first source rectangle crosses a tile boundary, and retrieving pixel data of a first source rectangular sub-area in a plurality of iterations if the first source rectangular sub-area crosses a tile boundary. If the first source rectangular sub-area does not cross a tile boundary, the pixel data of the first source rectangular sub-area may be retrieved in a single iteration. However, the step of storing pixel data retrieved may be performed in a single block transfer irrespective of whether such tile boundary crossing is present or not.

### BRIEF DESCRIPTION OF THE DRAWINGS

Figure 1 is a block diagram of a computer system comprising a graphics controller circuit which may store input display data in a display memory and generate display signals to display an image on a display unit.

Figure 2 is a block diagram of display memory illustrating a scan line order scheme of storing display pixel data.

Figure 3 is a block diagram of a display screen comprised in display unit illustrating a move image operation which may be specified by a user of a computer system.

Figure 4 is a diagram of display memory illustrating a tiled scheme of storing display pixel data.

Figure 5 is a representation of a tiled scheme illustrating an example of a move image operation where destination area crosses tile boundaries.

Figure 6 is a block diagram of a graphics controller circuit of the present invention comprising a pixel path block and a transfer engine.

Figure 7 is a block diagram of pixel path block which may generate display pixel data by executing a raster operation on input pixel data.

Figure 8 is a block diagram of a transfer engine which may transfer a rectangular area of pixel data in accordance with the present invention.

Figure 9 is a flow chart illustrating steps performed by the graphics controller circuit of the present invention in performing a move image operation.

### Description of the Preferred Embodiment

With reference to Figures 1 and 5, to move display image of source area ABCD to destination area JKLM, graphics controller circuit 120 of the present invention may divide destination area JKLM into four logical rectangular sub-areas (JQOP, KROQ, LSOR, and MPOS) defined by X-tile boundary line 384, Y-tile boundary line 32, and destination area boundary lines (JK, KL, LM, and MJ). Graphics controller circuit 120 may then retrieve pixel data corresponding to one of source sub-areas AEIH, BFIE, DHIG, and CGIF (which correspond respectively to destination sub-areas JQOP, KROQ, LSOR, and MPOS), and store retrieved pixel data of the source sub-areas in memory locations of a corresponding destination sub-area. Graphics controller circuit 120 may similarly transfer pixel data corresponding to the three remaining sub-areas.

As each destination sub-area may be located within a tile, and as pixel data of each tile may be stored in a same page of display memory 130, graphics controller circuit 120 of the present invention may take advantage of higher rate at which pixel data may be stored (or retrieved) while storing data in memory locations of a same row in display memory 130.

It may thus be appreciated that the method of transfer of pixel data in the present invention may be optimized according to location of. destination area in relation to tile boundaries (and hence storage in memory rows) of display unit 130. Such a scheme may be particularly advantageous as graphics controller circuit 120 of the present invention may perform raster operations along with a move operation, and such raster operations may have as one of operands pixel data corresponding to destination area prior to move operation.

For example, in Figure 5, prior to specifying a move operation, a display cursor may initially be located within destination area JKLM, and a user of computer system 100 may specify a move operation of an image in area ABCD to destination area JKLM. It may be a requirement of such a move operation to preserve the display cursor in the destination area even though the image of source area ABCD is moved to the destination area.

Hence, to preserve such a display cursor, graphics controller circuit 120 may first retrieve pixel data in memory locations corresponding to the destination area and source area, perform a raster operation using pixel data of the destination area and source area, and then save pixel data resulting from raster operation in memory locations corresponding to destination area. Although the above explanation is provided with reference to preserving a display cursor, it will be appreciated that graphics controller circuit 120 may use pixel data stored in the destination area prior to a move operation for several types of raster operations well known in the art.

As memory locations corresponding to the destination area JKLM may be accessed more times (to retrieve and store) than memory locations corresponding source area, and as graphics controller circuit 120 of the present invention may be designed to more efficiently access destination area memory locations, the throughput performance of computer system 100 of the present invention may be enhanced compared to performance in prior art computer systems.

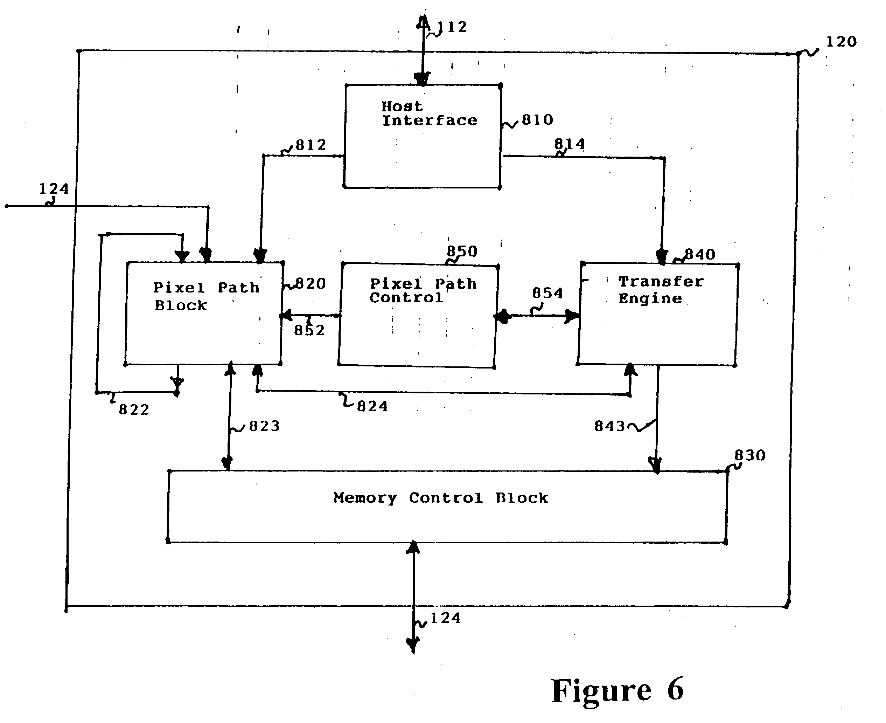

Figure 6 is a block diagram of graphics controller circuit 120 of the present invention which may perform a move image operation while performing a raster operation in parallel. Graphics controller circuit 120 may comprise pixel path block 820, pixel path control 850, transfer engine 840, host interface 810, and memory control unit 830. Host interface 810 may be designed to send and receive display data and commands from host 110 over system bus 112.

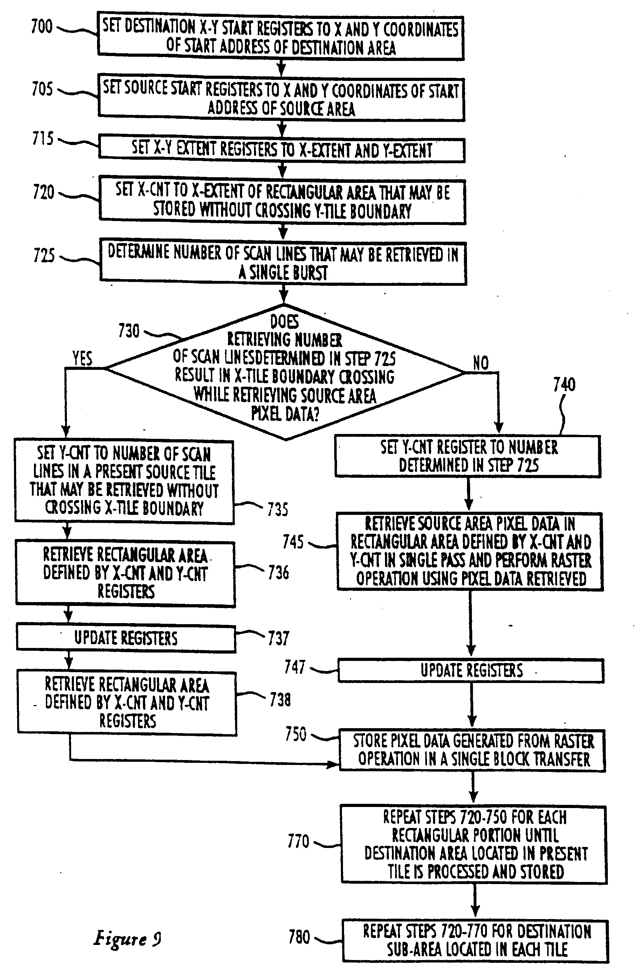

To perform a move image operation (or any raster operation in general), transfer engine 840 may retrieve pixel data from display memory 140 according to the method of the flow chart in Figure 9. Pixel path block 820 may receive pixel data over display memory bus 124, perform operations as may be specified by commands received from host 110, and provide resulting pixel data to memory control unit 830.

Received commands may specify operations such as raster operations or stretch operations or transparency operations. Each raster operation may comprise up to four operands in a preferred embodiment, and each of such operands may comprise pixel data from host 110 or display memory 140. Results of a raster operation may also be provided as an operand for a subsequent raster operation.

Pixel path block 820 may provide a transparency mask which may be used by display memory 140 to selectively store only those bytes indicated by transparency mask. Such selective storing may enable graphics controller circuit 120 to perform a transparency operation.

While pixel path block 820 generates pixel data by performing raster operations, transfer engine 840 may provide a memory address corresponding to each pixel data generated by pixel path block 820 over bus 843 in parallel. Memory control unit 830 may store pixel data according to a transparency mask and memory addresses. Portions of memory control unit 830 may be included with display memory 140 as one unit. Pixel path control 850 generates control signals to coordinate the operation of pixel path block 820 and transfer engine 840.

A raster operation may include a move operation with no further processing in rasterop unit 570. To perform a raster operation, graphics controller circuit 120 may receive pixel data corresponding to operands (including destination area), perform a raster operation, and store the resulting pixel data in display memory 140 in memory locations corresponding to destination area. By optimizing the sequence of retrievals for destination area memory addresses, graphics controller circuit 110 may achieve an increased level of throughput performance compared to prior art graphics controller circuits.

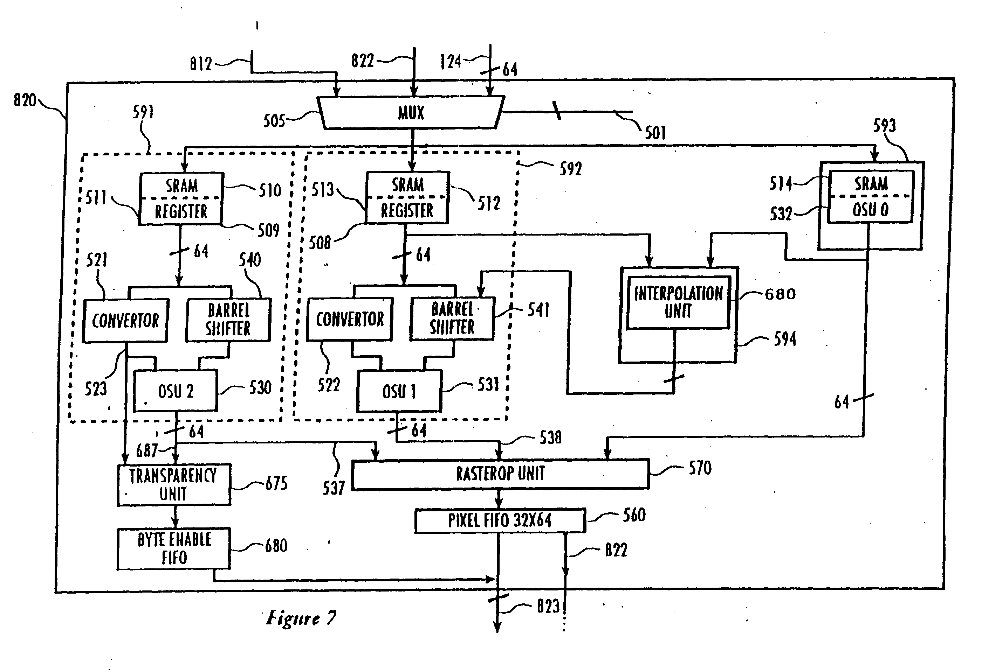

Figure 7 is a block diagram of pixel path block 820 which may receive pixel data as input and generate pixel data for display by executing raster operations on input pixel data. Multiplexor 505 may receive pixel data on lines 822, 124 and 812, and selectively provide received pixel data to one of three pipelines 591, 592, and 593 under the control of multiplexor control signal 501. Pipelines 591, 529 and 593 may process pixel data to generate up to three operands for a raster operation. Received pixel data may comprise monochrome pixel data or color pixel data.

Rasterop Unit 570 may execute a raster operation on such operands to generate pixel data for storing in display memory 140 or for providing such pixel data as an operand for a subsequent iteration. Pixel FIFO 560 may function as an intermediate buffer between rasterop unit 570 and display memory 140 of Figure 1 while storing pixel data. Graphics controller circuit 120 of Figure 1 may generate display signals to display unit 130 from pixel data stored in display memory 140.

Pixel path block 820 may further include transparency unit 675 which may generate a write enable mask byte corresponding to pixel data generated by executing raster operations. Byte enable FIFO 680 may buffer several such byte enable mask bytes and provide byte enable mask words to display memory 140.

Display memory 140 may use such a write enable mask to selectively store pixel data received from pixel FIFO 560 to perform a transparency operation. One embodiment of transparency unit 675 and a method of performing a transparency operation is described in co-pending U.S. Patent Application Serial Number UNASSIGNED, Attorney Docket Number CRUS-0034, entitled "A METHOD AND APPARATUS FOR EXECUTING A RASTER OPERATION IN A GRAPHICS CONTROLLER CIRCUIT", and incorporated herein by reference.

Referring to Figure 1, display memory 140 may comprise a RAMBUS™ memory with 64-bit words for storing pixel data. Stored pixel data may comprise display data received from host 110 or pixel data generated from raster operations. Display memory 140 may receive a 64-bit (eight bytes) data word resulting from a raster operation and a corresponding write enable mask during a clock cycle. The write enable mask may comprise eight bits corresponding to each byte of the 64-bit data word received, with each bit specifying whether a corresponding byte may be written into display memory 140. Display memory 140 may store (and thus overwrite) only those bytes of data specified by the write enable mask.

Continuing with reference to Figures 7 and 6, pixel path control 850 may generate controls signals to coordinate operations of transfer engine 840, pipelines 591, 592 and 593, transparency unit 675 and rasterop unit 560. For example, pixel path control 850 may cause a transparency operation to be performed on a portion of a video image while moving the video image portion to a destination- area.

To perform such a combination of functions, transfer engine 840 may retrieve pixel data corresponding to an image to be moved, and provide the pixel data as an operand to pixel pipeline 592 or 593 depending on the specific steps which may need to be performed on retrieved pixel data. Pixel path control 850 may generate control signals to cause rasterop unit 570 to generate pixel data by performing a raster operation.

In parallel, pixel path control 850 may cause transparency unit 675 to receive a transparency signal and generate a transparency mask corresponding to the pixel data generated by rasterop unit 675. Display memory 140 may use the transparency mask to selectively store only a subset of pixel data generated by rasterop unit 570. Pixel path control 850 may cause pixel data to be stored in memory locations corresponding to the destination area of a move operation. Hence, pixel path control 850 may cause other functions (such as transparency operation) to be performed along with a move display block operation.

Pixel FIFO 560 may receive from rasterop unit 570 64-bit pixel data words generated from execution of raster operations. Pixel FIFO 560 may store received pixel data in display memory 140 over memory bus 124. To perform a raster operation with more than three operands, pixel FIFO 560 may send pixel data generated by rasterop unit 570 to multiplexor 505 as an operand for a subsequent iteration over bus 822. Pixel FIFO 560 may transfer multiple 64-bit pixel words in a single burst transfer to display memory 140. In a preferred embodiment, pixel FIFO 560 may store up to 32 64-bit words, and transfer all the data in a single burst.

Fourth pipeline 594 comprises an interpolation unit 680 and may upscale or downsize a video image corresponding to input video data. Interpolation unit 680 may receive pixel data corresponding to two scan lines of input video data from pipelines 592 and 593 respectively, and interpolate the input video pixel data to generate pixel data of the upscaled or downsized video image. Interpolation unit 680 may send the pixel data generated to pipeline 592. One embodiment of interpolation unit 680 is described in co-pending U.S. Patent Application Serial Number 08/536,553, entitled "A Method and Apparatus for Minimizing Number of Pixel Data Fetches Required for a Stretch Operation of Video Images", filed September 28, 1995, and incorporated herein by reference.

Pipeline 591 may comprise memory interface circuit 509, converter 521, barrel shifter 540 and operand storage unit 2 (OSU2) 530 for processing operand 2 of each raster operation. Memory interface circuit 509 may receive pixel data from multiplexor 505, and forward pixel data to either convertor 521 or barrel shifter 540 depending on whether pixel data comprises monochrome pixel data or color pixel data.

If pixel data comprises monochrome pixel data, memory interface circuit 509 may provide such monochrome pixel data to convertor 521. Convertor 521 may convert monochrome pixel data to color pixel data. Converter 521 of a preferred embodiment may convert each monochrome pixel data bit to a format specified by an user of computer system 100. One embodiment of convertor 521 is described in co-pending U.S. Patent Application Serial Number UNASSIGNED, Attorney Docket Number CRUS-0036 entitled "A Method and Apparatus for Converting Monochrome Pixel Data to Color Pixel Data", filed December 19, 1995, and incorporated herein by reference.

If pixel data received from multiplexor 505 comprises color pixel data, memory interface circuit 509 may provide such color pixel data to barrel shifter 540. Barrel shifter 540 may rotate color pixel data received from register 511 for required alignment. For example, if a required pixel data is located from bit position 8, barrel shifter 540 may shift color pixel data by eight positions (corresponding to bits 0-7) to position the required pixel data starting with least significant bit. Barrel shifter 540 forwards rotated color pixel data to OSU2 530.

Second pipeline 592 (to process operand 1) comprising SRAM 512, register 513, convertor 522, and barrel shifter 541 may operate similar to first pipeline 591, and store a 64-bit word for operand 1 in OSU1 531 during each clock cycle. However, barrel shifter 541 may receive pixel data corresponding to upscaled or downsized video image from interpolation unit 450, and provide such pixel data as operand 1 through OSU1 531. Third pipeline 593 may comprise SRAM 514 for buffering and providing operand 0 to OSU0 532.

Rasterop unit 570 may receive three operands (termed source, destination, and pattern operands) from OSU1 531, OSU0 532 and OSU2 530 respectively, and execute a raster operation to generate pixel data. The raster operation may comprise, for example, a boolean logical operation of all or a subset of the three operands. Some raster operations may require less than three operands, in which case operand output of a corresponding OSU may not be used. Raster operation code, which specifies a type of logical operation to be performed on the operands, may be specified by a register in graphics controller 120.

Hence, graphics controller circuit 120 of the present invention may perform other operations such as a raster operation or a transparency operation while moving pixel data from one portion of display memory 140 to another portion to perform a move operation.

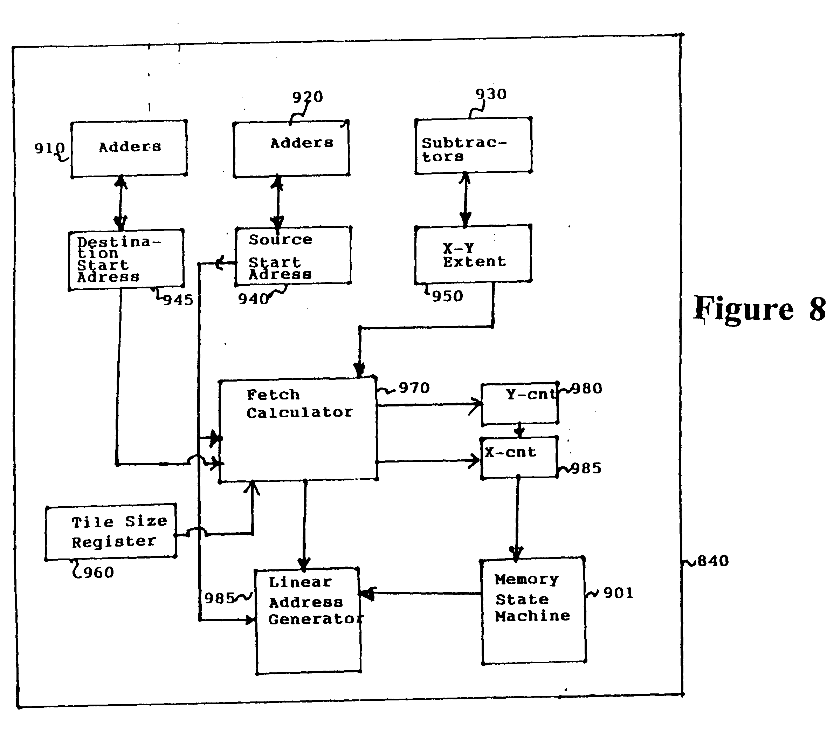

Figure 8 is a block diagram of transfer engine 840 which may transfer pixel data according to the method in flow chart of Figure 9. Transfer engine 840 may comprise adders 910 and 920, destination start registers 945, subtractors 930, source start registers 940, X-Y extent registers 950, fetch calculator 970, linear address generator 985, and tile size register 960.

With reference to Figures 5, 8 and 9, to move a video image of source area ABCD to destination area JKLM, host 110 may set registers 945, 940 and 950 to appropriate values and send a command to begin a move image operation. Host 110 may set destination start registers 945 to X, Y coordinates of starting address of destination area (pixel point J) in step 700. For example, X-Y source start registers 945 may be load with values 374 and 20 which represent the X and Y coordinates of point J of destination area JKLM. As illustrated in Figure 5, pixel points K, L, and M are shown with (X, Y) coordinates (450, 20), (450, 39) and (374, 39) respectively.

In step 705, host 110 may set source start registers 940 to X, Y coordinates of the starting address of the source area. Hence, the source start registers 940 may be set to X, Y coordinates (130, 60) of pixel point A. In step 715, host 110 may set X-Y extent registers 950 to X-extent and Y-extent of the source (or destination) rectangle area. Hence to move an image from source area ABCD to destination area JKLM, the X-extent may be set to a value of 80 (i.e., 450-370), and Y-extent may be set to a value of 19 (i.e., 39-20). Host 110 may then send a command to initiate a move image operation.

Graphics controller circuit 120 may execute steps 720 through 770 of Figure 9 to transfer each of rectangular sub-areas JQOP, KROQ, LSOR, and MPOS corresponding to destination area JKLM. Such sub-areas may be defined by X, Y tile boundaries and destination area boundary lines as illustrated in Figure 5.

Graphics controller 120 may transfer only a portion (rectangular in shape also) of such a sub-area in a single burst as internal buffers may not have sufficient storage space to store all pixel data in such a sub-area. For example, SRAMs 510, 512 and 514 (which buffer pixel data received by graphics controller 120) may be capable of storing only 128 bytes of pixel data, and accordingly graphics controller circuit 120 may not retrieve more than 128-bytes of pixel data in a single iteration.

Hence, in step 720, fetch calculator 970 may determine the number of pixels in X-dimension (hereinafter referred to as X-count value) of a destination block which may be stored without crossing Y-tile boundary. Hence, in effect, fetch calculator 920 determines the number of pixels along line JQ of Figure 5, and sets X-cnt register 985 to an X-count value. Hence, X-cnt register 985 may be set to a value of 10 (i.e., 384-374) while moving image from source area ABCD to destination area JKLM.

In step 725, fetch calculator 970 may determine the number of scan lines of X-count length which may be retrieved in a single block or burst transfer. As graphics controller circuit 120 may not retrieve more than 128-bytes in a single block transfer, fetch calculator 970 may thus determine the number of scan lines to retrieve by dividing 128 with the X-count value.

Hence if the X-count has value between 128 and 65, fetch calculator 970 may determine to retrieve one scan line. If the X-count has a value between 64 and 33, fetch calculator 970 may determine to retrieve two scan lines. In the example of Figure 5, f-etch calculator 970 may determine to retrieve 12 scan lines as dividing 128/10 results in a quotient of 12.

In step 730, fetch calculator 970 may further examine X and Y coordinates stored in source start register 940 to determine whether retrieving the number of scan lines determined in step 725 may result in an X-tile crossing (in the source area). If such a X-tile crossing may occur, fetch calculator 970 may retrieve pixel data corresponding to a rectangular area determined in steps 725 and 720 in multiple passes.

Thus, in the example of Figure 5, retrieving 12 scan lines from the start address of source area ABCD results in crossing of X-tile boundary (X-tile axis 64) as starting point A has coordinates of (130, 60). In step 735, fetch calculator 970 sets Y-cnt register 980 to 4 (64-60), i.e, number of scan lines in present source tile (hereinafter referred to as Y-count value).

In step 736, memory state machine 901 may generate control signals to linear address generator 985 to retrieve pixel data corresponding to a rectangular area defined by Y-cnt register 780 and X-cnt register 785 in a single burst or block transfer. The value in X-cnt register 985 may be decremented as each pixel data is retrieved, and when data in X-cnt register 985 reaches 0, data in Y-cnt register 980 may be decremented. When data in Y-cnt register 980 reaches 0, transfer is completed for the current pass.

Hence, in the example of Figure 5, four scan lines with each scan line comprising 10 pixel data may be retrieved. Graphics controller 120 may perform raster operations on pixel data retrieved in step 736. In step 737, adder 920 may add a Y-count value to the Y coordinate of source start register 940. Adder 910 may add a Y-count value to the Y coordinate of destination start register 945. Subtractor 930 may subtract the Y-count value from the Y-extent value stored in X-Y extent register 950.

Graphics controller circuit 120 may repeat steps 735-737 to complete retrieving pixel data from a portion of source sub-area as determined in steps 720 and 725. In the example of Figure 5, fetch calculator 970 may set Y-cnt register to 8, and retrieve 8 scan lines from a starting point specified by updated destination start register 945.

However, if no tile crossing is detected in step 730, in step 740, Y-cnt register 980 may be set to a number determined in step 725 (hereinafter referred to as the Y-count value). In step 745, memory state machine 901 may generate control signals to linear address generator 985 to retrieve pixel data corresponding to a rectangular area defined by Y-cnt register 780 and X-cnt register 785 in a single burst or block transfer in a similar manner as in step 736. In step 747, registers 940, 945 and 950 may be updated in a similar manner as in step 737.

In step 750, graphics controller circuit 120 may store in one block transfer all pixel data generated by executing raster operations on pixel data retrieved in steps 737 or 745. It will thus be appreciated that the transfer method of the present invention may be optimized according to location of destination area in relation to tile boundaries.

Graphics controller circuit 120 may repeat steps 720-760 to completely transfer pixel data of a source sub-area to memory locations corresponding to a destination sub-area. With reference to example of Figure 5, while transferring source sub-area BFIE, graphics controller circuit 120 may transfer only one scan line by executing steps 720-750 each time as the X-count for each iteration may be 70 (QK=70) and only one complete scan line may fit into 128-bytes. Hence, to transfer source sub-area BFIE, graphics controller circuit 120 may execute steps 720-750 twelve times corresponding to twelve scan lines present in sub-area BFIE.

Thus, to transfer each of the sub-areas AEIH, BFIE, DHIG, and CGIF, graphics controller circuit 120 may execute steps 700-720. After transferring each sub-area, X-Y extent registers 950, destination start register 940, and source start register 945 may be restored to original values (i.e., prior to starting transfer of pixel data). For example, after transferring sub-area AEIH and BFIE, X-extent may need to be restored to AB. Accordingly, temporary registers may be provided within graphics controller circuit 120 to preserve such original values.

Although the present invention is explained with reference to a move image operation, it will be appreciated that the present invention may be practiced with any other operations which may transfer pixel data from one area to another area.

While the preferred embodiment and various alternative embodiments of the invention have been disclosed and described in detail herein, it may be apparent to those skilled in the art that various changes in form and detail may be made therein without departing from the spirit and scope thereof.

## Claims

1. In a computer system storing pixel data of a video image in a set of memory locations comprised in a memory circuit according to a tiled scheme, the tiled scheme comprising a plurality of tiles on a display screen for displaying the video image, the plurality of tiles being formed by a set of X-tile boundaries and a set of Y-tile boundaries, a method for transferring a set of pixel data in the memory circuit from memory locations corresponding to a source area to memory locations corresponding to a destination area, each of the destination area and the source area being defined by a set of boundary lines, and wherein the destination area crosses at least one X-tile boundary and at least one Y-tile boundary, the method comprising the steps of:
dividing the destination area into a set of destination rectangular sub-areas defined by the at least one X-tile boundary, the at least one Y-tile boundary, and the set of boundary lines of the destination area;
retrieving the pixel data of a source rectangular sub-area comprised in the source area, the source rectangular sub-area corresponding to a destination rectangular sub-area comprised in the set of destination rectangular sub-areas; and
storing pixel data retrieved of a source rectangular sub-area in memory locations corresponding to the destination sub-area.

2. The method of claim 1 wherein the step of retrieving the pixel data further comprises the steps of:
determining a number of pixel data which may be retrieved in a single block transfer; and
retrieving at most the number of pixel data in one of a plurality of successive iterations.

3. The method of claim 2 wherein the step of storing pixel data further comprises the step of storing in a single block transfer the pixel data retrieved in the step of retrieving at most the number of pixel data.

4. The method of claim 3 wherein the step of retrieving at most the number of pixel data further comprises the step of retrieving the pixel data comprised in a scan line of the video image.

5. The method of claim 1 wherein the step of retrieving the pixel data of a source rectangular sub-area further comprises the steps of:
determining whether the source rectangle crosses a tile boundary;
retrieving the pixel data of the source rectangular sub-area in a plurality of iterations if the source rectangular sub-area crosses a tile boundary; and
retrieving the pixel data of the source rectangular sub-area in a single iteration if the source rectangular sub-area does not cross a tile boundary.

6. The method of claim 5 wherein the step of retrieving the pixel data of a source rectangular sub-area further comprises the step of storing the pixel data retrieved in the plurality of successive iterations of step (b) of claim 5 in a single block transfer.

7. In a computer system storing pixel data of a video image in a set of memory locations comprised in a memory circuit according to a tiled scheme, the tiled scheme comprising a plurality of tiles formed by a set of X-tile boundaries and a set of Y-tile boundaries, a method of transferring a set of pixel data in the memory circuit from memory locations corresponding to a source area to memory locations corresponding to a destination area, each of the destination area and the source area being defined by a set of boundary lines, and wherein the destination area crosses at least one X-tile boundary and at least one Y-tile boundary, the method comprising the steps:
(a) dividing the destination area into a set of destination rectangular sub-areas defined by the at least one X-tile boundary, the at least one Y-tile boundary, and the boundary lines of the destination area;
(b) determining a number of pixel data which can be retrieved in a single block transfer;
(c) determining a number of scan lines in a destination rectangular sub-area which fit into the number of pixel data determined in step (b), wherein the destination sub-area is comprised in the set of destination rectangular sub-areas;
(d) examining y-coordinate of a start address of the destination rectangular sub-area to determine whether retrieving the number of scan lines would require crossing an X-tile boundary;
(e) retrieving the pixel data of the number of scan lines in a plurality of block transfers if retrieving the number of scan lines would require crossing an X-tile boundary; and
(f) retrieving the pixel data of the number of scan lines in one block transfer if retrieving the number of scan lines would not require crossing an X-tile boundary;
(g) storing in a single block transfer the pixel data retrieved in step (f) or step (e) ;

8. A graphics controller circuit to operate in conjunction with a memory in a computer system, wherein the memory stores pixel data corresponding to a video image according to a tiled scheme, the tiled scheme comprising a plurality of tiles on a display screen, the plurality of tiles being defined by a set of X-tile boundaries and a set of Y-tile boundaries, the graphics controller circuit transferring a set of pixel data corresponding to a source area to memory locations corresponding to a destination area, each of the destination area and the source area being defined by a set of boundary lines, and wherein the destination area crosses at least one X-tile boundary and at least one Y-tile boundary, said graphics controller circuit comprising:
raster operation means for receiving the set of pixel data, and for generating a set of display pixel data by performing a raster operation on a set of input pixel data;
a transfer engine for retrieving the set of pixel data from the memory and for providing to said pixel path block, said transfer engine dividing the destination area into a set of destination rectangular sub-areas defined by the at least one X-tile boundary, the at least one Y-tile boundary and the boundary lines of the destination area, said transfer engine retrieving the pixel data of a source rectangular sub-area comprised in the source area, the source rectangular sub-area corresponding to a destination rectangular sub-area comprised in the set of destination rectangular sub-areas; and
a memory control unit for storing the set of display pixel data generated by said raster operation means.

9. The graphics controller circuit of claim 8 wherein said transfer engine retrieves sequentially a subset of pixel data of a source rectangular sub-area corresponding to each of the set of destination rectangular blocks, and provides the subset of pixel data to said pixel path block, wherein the subset of pixel data is comprised in the set of pixel data.

10. The graphics controller circuit of claim 9 wherein said transfer engine comprises:
a start destination register for storing X, Y coordinates of a start address of the destination area;
a start source register for storing X, Y coordinates of a start address of the source area;
an X-Y extent register to store an X-extent and a Y-extent of the source area to be transferred;
an X-cnt register to store a number of pixel data to be retrieved along X-tile direction;
a Y-cnt register to store a number of scan lines to be retrieved;
a linear address generator for generating memory addresses to retrieve each of the set of pixel data;
a memory state machine for causing said linear address generator to generate memory addresses according to values stored in said X-cnt register and said Y-cnt register; and
a fetch calculator for determining the number of scan lines to be retrieved and the number of pixel data to be retrieved along the X-tile direction, said fetch calculator determining the number of pixel data to be retrieved along X-direction based on number of pixels present in X-direction in each of the destination rectangular sub-area.

11. The graphics controller circuit of claim 10 further comprising a register for buffering all pixel data received by the graphics controller circuit, and wherein said register stores a predetermined maximum amount of data.

12. The graphics controller circuit of claim 11 wherein said fetch calculator determines the number of scan lines to be retrieved based on the predetermined maximum amount of data and the number of pixels to be retrieved in the X-direction.

13. A computer system for displaying a video image on a display screen, said display screen being divided into a set of tiles defined by a set of X-tile boundaries and a set of Y-tile boundaries, said computer system providing for moving a portion of the video image comprised in a source area on the display screen to a destination area, said computer system comprising:
a memory comprising a plurality of memory locations for storing a set of pixel data corresponding to the source area according to said set of tiles; and
a graphics controller circuit for transferring the set of pixel data to the set of memory locations corresponding to the destination area, each of the destination area and the source area being defined by a set of boundary lines, and wherein the destination area crosses at least one X-tile boundary and at least one Y-tile boundary, said graphics controller circuit comprising:
a pixel path block for receiving the set of pixel data, and for generating a set of display pixel data by performing a raster operation on the first set of input pixel data;
a transfer engine for retrieving the set of pixel data from the memory and for providing to said pixel path block, said transfer engine dividing the destination area into a set of destination rectangular sub-areas defined by the at least one X-tile boundary, the at least one Y-tile boundary and the boundary lines of the destination area, said transfer engine retrieving the pixel data of a first source rectangular sub-area comprised in the source area, the first source rectangular sub-area corresponding to a first destination rectangular sub-area comprised in the set of destination rectangular sub-areas; and
a memory control unit for storing the set of display pixel data generated by said pixel path block.

14. The computer system of claim 13 wherein said transfer engine retrieves sequentially a subset of pixel data of a source rectangular sub-area corresponding to each of the set of destination rectangular blocks, and provides the subset of pixel data to said pixel path block, wherein the subset of pixel data is comprised in the set of pixel data.

15. The computer system of claim 14 wherein said transfer engine comprises:
a start destination register for storing X, Y coordinates of a start address of the destination area;
a start source register for storing X, Y coordinates of a start address of the source area;
an X-Y extent register to store an X-extent and a Y-extent of the source area to be transferred;
an X-cnt -register to store a number of pixel data to be retrieved along X-tile direction;
a Y-cnt register to store a number of scan lines to be retrieved;
a linear address generator for generating memory addresses to retrieve each of the set of pixel data;
a memory state machine for causing said linear address generator to generate memory addresses according to values stored in said X-cnt register and said Y-cnt register; and
a fetch calculator for determining the number of scan lines to be retrieved and the number of pixel data to be retrieved along the X-tile direction, said fetch calculator determining the number of pixel data to be retrieved along X-direction based on number of pixels present in X-direction in each of the destination rectangular sub-area.

16. The computer system of claim 15 further comprising a register for buffering all pixel data received by the graphics controller circuit, and wherein said register stores a predetermined maximum amount of data.

17. The computer system of claim 16 wherein said fetch calculator determines the number of scan lines to be retrieved based on the predetermined maximum amount of data and the number of pixels to be retrieved in the X-direction.
